# FASCICULE DE BREVET EUROPEEN

(11) **EP 3 652 804 B1**
(45) Date de publication et mention de la délivrance du brevet: **07.06.2023**
(21) Numéro de dépôt: 18738317.9
(22) Date de dépôt: 10.07.2018
(51) Int. Cl.: H01M 10/44, H01M 10/48, H01M 12/08, H01M 10/04

(54) **PROCÉDÉ DE GESTION DE L'ÉNERGIE ÉLECTRIQUE TRANSITANT DANS UNE BATTERIE MÉTAL-AIR ET CELLULE ASSOCIÉE**
VERFAHREN ZUR STEUERUNG DER DURCH EINE METALL-LUFT-BATTERIE FLIESSENDEN ELEKTRISCHEN ENERGIE UND ZUGEHÖRIGE ZELLE
METHOD FOR MANAGING THE ELECTRICAL ENERGY PASSING THROUGH A METAL-AIR BATTERY AND ASSOCIATED CELL

(30) Priorité: 10.07.2017 FR 1756507
(43) Date de publication de la demande: 20.05.2020
(73) Titulaire: Electricité de France, 75008 Paris (FR)
(72) Inventeur: STEVENS, Philippe, 77940 Noisy Rudignon (FR); TOUSSAINT, Gwenaëlle, 77140 Nemours (FR)
(74) Mandataire: Plasseraud IP
(86) Numéro de dépôt international: PCT/EP2018/068626
(87) Numéro de publication internationale: WO 2019/011898

(56) Documents cités:
- WO-A1-2013/110097
- US-A1- 2011 250 512
- US-A1- 2012 098 499
- US-A1- 2017 162 899

## Description

### DOMAINE TECHNIQUE

L'invention se rapporte au domaine des batteries métal-air, et plus particulièrement aux procédés de gestion de l'énergie électrique transitant dans ces batteries, pendant les phases de charge et décharge. L'invention peut tout aussi bien se rapporter à une seule cellule métal-air ou à un ensemble de cellules formant une batterie.

### ARRIÈRE-PLAN TECHNOLOGIQUE

Les cellules de batteries métal-air se composent généralement d'une électrode négative à base d'un métal tel que le zinc, le fer ou le lithium, couplée à une électrode à air. Ces deux électrodes sont généralement en contact avec un électrolyte aqueux alcalin.

Lors de la décharge d'une telle batterie, de l'oxygène est réduit à l'électrode positive et le métal est oxydé à l'électrode négative :
Décharge à l'électrode négative : M → Mⁿ⁺ + n e⁻
Décharge à l'électrode positive : O₂ + 2 H₂O + 4 e⁻ → 4 OH⁻

L'avantage des systèmes métal-air réside dans l'utilisation d'une électrode positive de capacité infinie, l'oxygène consommé à l'électrode positive n'ayant pas besoin d'être stocké dans l'électrode mais pouvant être prélevé dans l'air ambiant. Les générateurs électrochimiques de type métal-air sont donc connus pour leurs énergies massiques élevées, pouvant atteindre plusieurs centaines de Wh/kg.

Les électrodes à air sont par exemple utilisées dans des piles à combustible alcalines qui sont particulièrement avantageuses par rapport à d'autres systèmes en raison des cinétiques réactionnelles élevées au niveau des électrodes et en raison de l'absence de métaux nobles tels que le platine.

Une électrode à air est une structure solide poreuse, généralement en poudre de carbone, en contact avec l'électrolyte liquide. L'interface entre l'électrode à air et l'électrolyte liquide est une interface dite « à triple contact » où sont présents simultanément la matière solide active de l'électrode (cette électrode comprenant généralement en outre un catalyseur), l'oxydant gazeux, c'est-à-dire l'air, et l'électrolyte liquide. L'électrode à air est habituellement composée de poudre de carbone à haute surface, permettant d'offrir une surface de réaction élevée et donc une densité de courant importante par rapport à la surface géométrique de l'électrode. Une grande surface de réaction est avantageuse pour compenser la différence entre la densité de l'oxygène gazeux et celle d'un liquide. Par exemple, la densité molaire de l'oxygène dans l'air est égale à environ 0,03 mol/L comparé à l'eau qui a une densité de 55 mol/L. La grande surface du carbone permet de multiplier les sites de réaction dans l'électrode à air.

Une description des différents types d'électrodes à air pour batteries zinc-air est exposée par exemple dans l'article bibliographique de V. Neburchilov et al., intitulé « A review on air cathodes for zinc-air fuel cells », Journal of Power Sources 195 (2010) p. 1271-1291. Lorsqu'une batterie métal-air doit être rechargée électriquement, le sens du courant est inversé. De l'oxygène est produit à l'électrode positive et le métal est redéposé par réduction à l'électrode négative :
Recharge à l'électrode négative : Mⁿ⁺ + n e⁻ → M
Recharge à l'électrode positive : 4 OH⁻ → O₂ + 2 H₂O + 4 e⁻

L'électrode à air n'est pas conçue pour être utilisée en sens inverse, et a tendance à être détruite mécaniquement par la pression hydraulique qui s'y forme lors de la production d'oxygène. Cette pression hydraulique provoque généralement une rupture des liaisons entre les grains de carbone dont est constituée l'électrode à air. Cette dégradation réduit la durée de vie de la batterie.

En outre, le catalyseur ajouté à l'électrode à air pour améliorer le rendement énergétique de la réaction de réduction de l'oxygène se dégrade au potentiel nécessaire à la réaction d'oxydation inverse lors de la charge de la batterie. La corrosion du carbone en présence d'oxygène par oxydation du carbone est également accélérée à des potentiels plus élevés. Afin de remédier à ces problèmes de stabilité, notamment en charge, il a été proposé d'utiliser une deuxième électrode positive qui n'est utilisée que pour la charge de la batterie. Un commutateur permet alors de relier une borne positive d'un circuit à la deuxième électrode pendant la charge, et de relier cette borne positive à l'électrode à air lors de la décharge de la batterie. La demande WO 2014/083267 décrit un exemple de batterie utilisant un tel système pour préserver l'électrode à air d'une dégradation en phase de charge.

Cette deuxième électrode positive, utilisée pendant la charge de la batterie, est typiquement composée d'une grille métallique en nickel ou un alliage de métaux. Cette électrode peut également être composée d'un matériau capable de stocker une quantité limitée d'énergie électrique sans dégagement d'oxygène. Un exemple d'une tel électrode positive est une électrode composée d'oxy-hydroxide de nickel, NiO(OH).

Il a été constaté que, lors de la charge de la batterie, cette deuxième électrode positive pouvait elle aussi subir des dégradations liées au dégagement d'oxygène. Cette dégradation intervient moins vite que sur l'électrode à air, mais conduit à une désolidarisation de la deuxième électrode positive qui dégrade progressivement les performances de la batterie à chaque cycle.

Le document WO2013/110097 décrit des cellules pour batteries métal-air mettant en oeuvre une première électrode métallique réversible, une électrode à air, et une seconde électrode réversible agissant comme une cathode en phase de décharge et comme une anode en phase de charge. Ce document décrit une décharge en deux temps dans laquelle seule la deuxième électrode positive est utilisée et seulement en début de décharge, et un deuxième temps où l'électrode à air est utilisée quand la tension entre les bornes de la batterie est descendue suffisamment pour atteindre une valeur seuil. Dans ce document, les deux phases de décharge sont consécutives et un contrôle de la tension est effectué pour passer du premier temps au deuxième temps. Toutefois, dans les batteries, la mesure de la tension ne constitue pas un bon indicateur de la puissance de la batterie et est utilisée pour déterminer un état de charge seulement. En effet, dans une batterie (contrairement à une résistance), la tension varie peu avec la puissance et de manière non linéaire, mais elle dépend d'autres paramètres tels que le potentiel thermodynamique des électrodes, le transport de masse des ions dans l'électrolyte, les phénomènes d'accumulation de charges aux interfaces et les barrières d'activations lié aux réactions oxydo-réduction ou l'état de charge de l'électrode. Il en résulte que la mesure de la tension conduite dans le document WO2013/110097 sur une batterie, ne permet pas de gérer la puissance électrique transitant dans la batterie de manière satisfaisante.

Le document US2011/0250512 décrit une cellule métal-air comprenant une électrode négative, une électrode positive à air, une électrode à dégagement d'oxygène et une électrode à haut rendement permettant la mise en oeuvre de phases de charge et de décharge standard via l'électrode à air, et, un dans mode de réalisation, avec un meilleur rendement via l'électrode à haut rendement.

Il est par conséquent recherché une architecture de cellule métal-air et un procédé de gestion de l'énergie électrique transitant dans une batterie métal-air qui protège mieux les électrodes positives en charge et qui allonge davantage encore la durée de vie des batteries.

### EXPOSE DE L'INVENTION

Pour répondre aux problèmes exposés ci-avant, la présente invention propose un procédé de gestion de l'énergie électrique transitant dans une batterie métal-air comprenant au moins une cellule comportant :
- une électrode négative ;
- une première électrode positive formant une électrode à air de la cellule et ;
- une deuxième électrode positive formant une électrode de puissance de la cellule.

La cellule comprenant en outre une troisième électrode positive de dégagement d'oxygène, le procédé comprend par ailleurs :
* une première phase de charge de la cellule dans laquelle une tension de charge est appliquée à la cellule, la tension de charge faisant passer un courant entre l'électrode négative et la deuxième électrode positive, les première et troisième électrodes positives étant électriquement inactives ; et
* une deuxième phase de charge de la cellule dans laquelle la tension de charge est appliquée à la cellule, la tension de charge faisant passer le courant entre l'électrode négative et ladite troisième électrode positive de dégagement d'oxygène, les première et deuxième électrodes positives étant électriquement inactives.

En prévoyant deux phases de charge distinctes, faisant intervenir chacune une électrode différente, l'invention permet de préserver la deuxième électrode positive d'une dégradation intervenant lorsque de l'oxygène est libéré sur cette électrode. En effet, il a été observé que la phase de charge d'une batterie métal-air fait généralement intervenir une première réaction d'oxydation sans dégagement d'oxygène sur la deuxième électrode positive (typiquement en nickel ou oxyde de nickel), pendant laquelle le métal ou oxyde de la deuxième électrode se transforme d'un premier état d'oxydation vers un deuxième état d'oxydation. Lorsque l'essentiel du métal ou de l'oxyde de métal a été transformé selon cette première réaction d'oxydation, la batterie n'est pas encore totalement chargée et une deuxième réaction d'oxydation vient transformer le métal ou l'oxyde de métal dans le deuxième état d'oxydation par une deuxième réaction d'oxydation faisant intervenir un dégagement d'oxygène.

Il a été ainsi identifié par les inventeurs que la dégradation de la deuxième électrode positive typiquement utilisée pour préserver l'électrode à air (première électrode positive) contre une détérioration, se désagrège non pas dès le début de la charge mais davantage en fin de charge.

La nature du matériau constituant la deuxième électrode positive semble avoir une capacité électrique inférieure à celle de l'électrode négative dans une batterie métal-air. Ainsi, pour que l'électrode négative soit totalement chargée il faut fournir une énergie électrique supérieure à celle nécessaire pour oxyder le matériau de la deuxième électrode positive. L'invention remédie à la dégradation lente mais progressive de la deuxième électrode positive en prévoyant une troisième électrode positive en un métal résistant au dégagement d'oxygène, et en connectant cette troisième électrode positive lors d'une deuxième phase de charge, avant que de l'oxygène ne se forme sur la deuxième électrode positive.

Le terme « electrode de puissance » couvre tous les matériaux envisageables en guise de deuxième électrode positive dans une batterie métal-air. En particulier, l'invention peut comprendre des cellules dans lesquelles les deuxième électrodes positives comprennent des oxydes régis par deux réactions d'oxydation différentes en phase de charge comme décrit ci-avant.

Selon un mode de réalisation, la deuxième électrode positive comportant un oxyde d'un métal dans un état d'oxydation donné, le procédé peut en outre comprendre :
- passer de la première phase à la deuxième phase sur détection d'un changement de la tension de charge.

La bascule de la première phase de charge à la deuxième phase de charge est avantageusement effectuée juste avant que de l'oxygène ne se dégage sur la deuxième électrode positive. Un signe annonciateur d'un tel changement peut par exemple être une augmentation dans la variation d'une tension ou d'un courant mesuré aux bornes de la batterie. Typiquement, lorsque la première réaction d'oxydation de l'oxyde de la deuxième électrode positive commence à prendre fin car l'essentiel de l'oxyde a été transformé, la dynamique de la réaction d'oxydation peut se traduire par une baisse de la tension aux bornes de la batterie (une augmentation de l'amplitude de cette tension) ou une diminution du courant transitant à travers la batterie si la tension est maintenue constante. La mesure d'un tel changement peut être un critère de passage à la deuxième phase de charge.

Selon un mode de réalisation, le procédé peut en outre comprendre :
- au moins pendant la première phase de charge, mesurer une amplitude de tension entre l'électrode négative et la deuxième électrode positive,
- sur détection d'une mesure de ladite amplitude de tension supérieure à un seuil de tension prédéterminé, déconnecter la deuxième électrode positive et connecter la troisième électrode positive, pour passer de la première phase de charge à la deuxième phase de charge.

L'amplitude de tension est mesurée entre l'électrode négative et la deuxième électrode positive notamment parce que c'est à travers ces deux électrodes que passe le courant de charge dans la cellule pendant la première phase de charge.

Notamment, le seuil de tension peut être une amplitude de tension au-dessus de laquelle un dégagement d'oxygène se produit sur la deuxième électrode positive.

Selon un mode de réalisation, pour une phase de décharge de la cellule dans laquelle l'électrode négative est connectée à une borne négative d'un circuit électrique pour fournir de l'énergie électrique à ce circuit électrique, le procédé peut en outre comporter :
- obtenir une information sur la demande en énergie électrique dudit circuit, et
   en fonction de la demande du circuit, appliquer au choix un parmi :
   * un premier régime de décharge de la cellule dans lequel la première électrode positive est connectée à une borne positive du circuit électrique, et
   * un deuxième régime de décharge de la cellule dans lequel la deuxième électrode positive est connectée à la borne positive du circuit électrique.

Les inventeurs ont constaté que les propriétés électriques des différentes électrodes positives d'une batterie métal-air ne confèrent pas les mêmes performances à la batterie. La première électrode positive, ou électrode à air, possède une densité d'énergie importante qui se traduit par la possibilité de fournir pendant une longue durée de l'énergie, mais à des niveaux de puissance modérés. En effet, la puissance fournie par l'électrode à air d'une batterie métal-air est limitée par la vitesse de diffusion de l'air dans l'électrode. La deuxième électrode positive possède quant à elle une densité d'énergie plus faible que la première électrode positive, mais n'est pas limitée par la vitesse de diffusion de l'air qui n'intervient pas dans son utilisation en décharge. Cette deuxième électrode positive peut ainsi fournir une puissance électrique plus importante en décharge, mais pendant une durée plus courte que ne le peut la première électrode positive. Cette deuxième électrode positive, dite électrode de puissance peut ainsi avantageusement être utilisée lorsqu'il existe un appel de puissance, tandis que l'électrode à air peut être utilisée dans un mode de fonctionnement standard sans appel de puissance. La même logique peut être mise en oeuvre pour la charge de la batterie, optimisant ainsi, dans la première phase de charge, l'utilisation de la deuxième électrode positive, qui peut être chargée plus vite que la troisième électrode positive. Ainsi, dans certains cas, il peut être avantageux de privilégier la connexion de la deuxième électrode positive lorsqu'une forte puissance électrique est fournie à la batterie en charge, et de privilégier la troisième électrode positive ou bien la première électrode positive pour des puissances électriques de charge plus faibles, dans la première phase de charge de la batterie.

Notamment, le premier régime peut correspondre à une fourniture de puissance électrique inférieure à un seuil de demande du circuit et le deuxième régime peut correspondre à une fourniture de puissance électrique supérieure au seuil de demande.

Notamment, le procédé peut en outre comprendre :
- mesurer une amplitude de tension entre l'électrode négative et une électrode parmi la première électrode positive et la deuxième électrode positive qui est connectée à la borne positive du circuit ; et
   lorsque l'amplitude de la tension est supérieure à une tension seuil prédéterminée, la tension seuil étant représentative d'un seuil de demande du circuit :
- sélectionner le deuxième régime, et
   lorsque la tension est inférieure à la tension seuil :
- sélectionner le premier régime.

Le seuil de demande de la batterie en charge peut être évalué à partir d'une surveillance de l'amplitude de tension aux bornes de la batterie.

Notamment, la tension seuil prédéterminée peut être estimée à intervalle de temps régulier à partir d'une comparaison entre une amplitude de tension mesurée entre l'électrode négative et la première électrode positive et une amplitude de tension mesurée entre l'électrode négative et la deuxième électrode positive.

Il a été constaté que les propriétés électriques et notamment la puissance électrique que peut fournir la batterie change au cours de la décharge de la batterie. Cette puissance électrique disponible est plus grande en début de décharge qu'en fin de décharge. Ainsi, il est pertinent de réévaluer la tension seuil de bascule entre la deuxième électrode positive et la première électrode positive au cours de la décharge de la batterie, afin d'optimiser le fonctionnement de la batterie. La valeur du seuil de tension peut dépendre de l'écart entre la tension mesurée aux bornes de l'électrode négative et la première électrode positive, et la tension mesurée aux bornes de l'électrode négative et la deuxième électrode positive. Alternativement, la sélection du premier ou du deuxième régime peut être effectué à partir de la mesure d'une amplitude de courant transitant dans la batterie. Le premier régime de décharge est sélectionné lorsque l'amplitude de courant mesurée est inférieure à un seuil de courant et le deuxième régime de décharge est sélectionné lorsque l'amplitude de courant mesurée est supérieure au seuil de courant.

L'invention peut notamment être mise en oeuvre en tant que produit programme d'ordinateur comportant une suite d'instructions mémorisées sur un support de mémorisation pour exécution par un ordinateur ou un dispositif dédié, ledit programme étant configuré pour exécuter le procédé exposé ci-avant au moyen d'une unité de pilotage.

L'invention se rapporte également à une cellule pour batterie métal-air comprenant :
- une électrode négative ;
- une première électrode positive formant une électrode à air de la cellule ;
- une deuxième électrode positive formant une électrode de puissance de la cellule ;
- une troisième électrode positive formant une électrode de dégagement d'oxygène de la cellule,
la cellule étant caractérisée en ce que la deuxième électrode positive est positionnée entre l'électrode négative et la première électrode positive), la cellule comprenant en outre une unité de pilotage configurée pour mettre en oeuvre le procédé selon l'invention.

Selon un mode préféré de réalisation, la troisième électrode positive est également positionnée entre l'électrode négative et la première électrode positive.

L'invention se rapporte également à une cellule pour batterie métal-air comprenant deux ensembles d'électrodes positives précédemment décrites, disposées de manière symétrique de part et autre de l'électrode négative.

L'architecture originale de batterie métal-air de la présente invention permet de préserver efficacement la deuxième électrode positive d'une dégradation en prévoyant une troisième électrode positive préférentiellement pour les réactions faisant intervenir un dégagement d'oxygène en charge. La deuxième électrode positive peut avoir une durée de vie plus longue et peut notamment servir pour des charges rapides ou pour fournir des puissances électriques plus grandes en décharge que la première électrode positive.

Selon un mode de réalisation, la deuxième électrode positive peut être une électrode métallique comprenant un composé ayant un potentiel d'oxydo-réduction plus positif qu'un potentiel d'oxydo-réduction d'un métal de l'électrode négative.

Selon un mode de réalisation, la deuxième électrode positive peut être une électrode métallique comprenant un composé choisi parmi : l'oxyhydroxyde de nickel, l'oxyde d'argent, l'oxyde de manganèse et un mélange de ces composés.

Ces matériaux ont la particularité d'offrir une puissance électrique plus grande que l'électrode à air. En outre, ces matériaux possèdent un potentiel d'oxydo-réduction plus positif que celui du métal constitutif de l'électrode négative. Ces matériaux possèdent également un potentiel d'oxydo-réduction plus positif que l'électrode à air.

Selon un mode de réalisation, la troisième électrode positive peut être une grille métallique en un composé choisi parmi : l'acier, le nickel, le titane.

Cette grille métallique peut également être recouverte d'un catalyseur, tel que par exemple un matériau pérovskite, pour réduire les surtensions de dégagement d'oxygène.

Selon un mode de réalisation, la deuxième électrode positive peut être configurée pour avoir une capacité énergétique correspondant sensiblement au tiers de la capacité énergétique de l'électrode négative.

Un tel rapport de capacité énergétique permet d'offrir de bonnes performances en énergie, puissance et en vitesse de charge à la batterie.

L'invention peut également se rapporter à une batterie métal-air comprenant au moins une cellule telle que celles présentées ci-avant.

### DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :
- la figure 1A est une représentation schématique d'une cellule de batterie métal-air comprenant une troisième électrode positive selon l'invention, et la figure 1B est une représentation schématique d'une cellule symétrique de batterie métal-air comprenant deux ensembles d'électrodes positives selon la figure 1A, ayant en commun leur électrode négative ;
- la figure 2 est une représentation schématique d'un branchement électrique permettant de gérer l'énergie électrique transitant dans une cellule de batterie métal-air selon l'invention ;
- la figure 3 est un ordinogramme représentant un procédé de charge d'une batterie métal-air comprenant deux phases de charge selon l'invention ;
- la figure 4 est un ordinogramme représentant un procédé de décharge d'une batterie métal-air permettant de sélectionner une électrode de puissance ou une électrode à forte densité d'énergie en fonction d'une demande de puissance ;
- la figure 5 est un graphique représentant la tension mesurée aux bornes d'une batterie métal-air selon l'invention au cours du temps, pendant plusieurs cycles de charge et décharge ;
- la figure 6 est une représentation schématique d'un système informatique pouvant être utilisé pour mettre en oeuvre le procédé de l'invention.

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

La présente invention propose une nouvelle architecture de cellule pour batterie métal-air qui permet d'augmenter leur durée de vie ainsi que leurs performances électriques. L'invention propose également un procédé de gestion de l'énergie électrique transitant dans une batterie métal-air composée d'au moins une cellule qui protège les électrodes positives de la batterie et rallonge sa durée de vie.

Afin de protéger une électrode positive utilisée lors de la recharge d'une batterie métal-air, l'invention propose d'ajouter une troisième électrode positive utilisée préférentiellement lorsque de l'oxygène est produit lors de la charge de la batterie.

Les batteries métal-air se composent généralement d'une électrode négative dans un métal tel que le zinc, le lithium ou le fer. Les batteries métal-air décrites par exemple dans le document WO 2014/083267 utilisent en plus d'une première électrode positive dite électrode à air, une deuxième électrode positive qui est utilisée lors de la charge de la batterie.

La deuxième électrode positive peut typiquement être en un métal tel que le nickel, l'argent ou un acier inoxydable. Cette électrode peut également être composée d'un matériau capable de stocker une quantité limitée d'énergie électrique sans dégagement d'oxygène. Un exemple d'une tel électrode positive est une électrode composée d'oxy-hydroxide de nickel, NiO(OH)._Cette électrode est utilisée pour la phase de charge pour que le dégagement d'oxygène n'intervienne pas au niveau de la structure fragile de l'électrode à air faite de poudre de carbone.

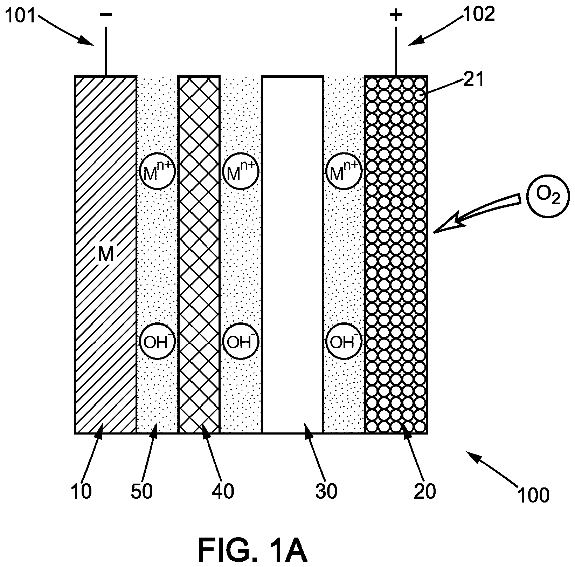

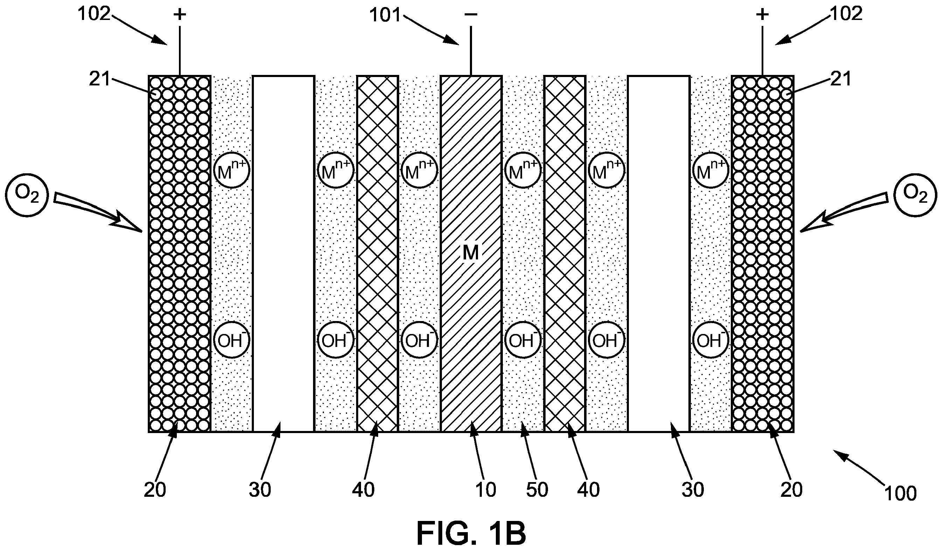

Pour éviter toutefois que le dégagement d'oxygène ne détériore progressivement la deuxième électrode positive, qui peut elle aussi être sujette à un phénomène de désagrégation conduisant à une baisse de performance électrique de la batterie au cours du temps, l'invention propose une architecture de batterie originale conformément par exemple à la structure représentée sur les figures 1A ou 1B.

La figure 1A représente une cellule 100 d'une batterie métal-air comprenant une électrode négative 10, un électrolyte 50 de pH fortement basique, typiquement de valeur égale ou supérieure à 14 et une première électrode positive 20 formant une électrode à air. L'électrode à air comprend dans sa structure des grains de carbone 21. En outre, la cellule 100 comprend une deuxième électrode positive 30 formant une électrode de puissance de la batterie comprenant la cellule 100 et une troisième électrode positive 40 formant une électrode de dégagement d'oxygène de la cellule 100.

L'électrode négative est destinée à être reliée à une borne négative 101 de la batterie, et l'électrode à air est destinée, au moins en phase de décharge, à être reliée à une borne positive 102 de la batterie. Des ions Mⁿ⁺ du métal M constituant l'électrode négative circulent dans l'électrolyte entre les électrodes connectées aux bornes. L'électrolyte comprend également une forte concentration en ions hydroxyle OH⁻.

Les inventeurs ont remarqué que la deuxième électrode positive 30, subit également une dégradation lors des phases de charges, bien qu'elle soit plus lente que celle que subirait l'électrode à air si la première électrode positive 20 (l'électrode à air) était utilisée en charge.

Pour limiter l'usure et la dégradation de la deuxième électrode positive 30 au cours du temps, et augmenter la durée de vie de la batterie, l'invention propose de prévoir deux phases de charge distinctes : une première phase de charge pendant laquelle la deuxième électrode positive 30 est connectée à la borne positive 102 de la batterie, et une deuxième phase de charge pendant laquelle la troisième électrode positive 40 est connectée à la borne positive 102 de la batterie. Pendant la première phase de charge, le courant de charge transitant dans la batterie conduit à une oxydation de la deuxième électrode positive 30 mais pendant une durée moins longue que celle qui conduirait à une dégradation de ladite électrode. La deuxième phase de charge donne lieu à un dégagement d'oxygène sur la troisième électrode positive 40, ce qui permet de préserver la deuxième électrode positive 30 des conséquences néfastes de cette production importante d'oxygène en charge.

Il a notamment été observé que l'utilisation d'oxydes de métaux dans la deuxième électrode positive 30 pouvait présenter un intérêt pour augmenter davantage encore les performances électriques d'une batterie métal-air.

Cette deuxième électrode positive 30, généralement en un métal tel que le nickel, est parfois composée d'un oxyde comme par exemple l'oxyhydroxyde de nickel (NiOOH) utilisant le couple Ni(II)/Ni(III).

Il a été constaté que l'utilisation de l'oxyhydroxyde de nickel (NiOOH) utilisant le couple Ni(II)/Ni(III) dans le matériau de la deuxième électrode positive 30 présente des avantages d'un point de vue électrique. En effet l'oxyhydroxyde de nickel est plus performant en puissance que l'électrode à air. L'électrode à air offre des densités d'énergie supérieures à celles accessibles avec une électrode en oxyhydroxyde de nickel mais est limitée par la vitesse de diffusion de l'air dans la structure de l'électrode ce qui réduit la puissance que peut fournir une batterie utilisant uniquement la première électrode positive 20 en phase de décharge.

L'utilisation d'une deuxième électrode positive 30 en oxyhydroxyde de nickel offre la possibilité de combiner les avantages de durée de cycle de décharge des batteries métal-air (accessibles grâce à la forte densité d'énergie des électrodes à air) avec des performances en puissance des batteries métal-nickel. Une cellule de batterie métal-air utilisant en guise de deuxième électrode positive 30 un oxyde de métal tel que de l'oxyhydroxyde de nickel forme une cellule hybride « métal-nickel-air ».

En phase de décharge, la réaction suivante est observée sur la deuxième électrode positive 30 :

NiO(OH) + H₂O + e⁻ → Ni(OH)₂ + OH⁻ (réaction a)

Une telle batterie peut permettre une gestion plus fine de la puissance et de l'énergie électrique transitant dans la batterie. Lorsqu'une demande de puissance standard parvient à la batterie en phase de décharge, la première électrode positive 20 peut être connectée à la borne positive. Pour des appels de puissance plus importants, il est possible de connecter la deuxième électrode positive en oxyhydroxyde de nickel.

La capacité électrique (exprimée en mAh/cm²) de la deuxième électrode positive en oxyhydroxyde de nickel s'avère être plus faible que celle de l'électrode négative 10. Une conséquence de cette différence de capacité est que la recharge de la cellule nécessite l'intervention de deux réactions d'oxydation au niveau de la deuxième électrode positive 30. Dans une première réaction d'oxydation, le nickel à l'état d'oxydation (II) est transformé en nickel à l'état d'oxydation (III) selon la réaction :

Ni(OH)₂ + OH⁻ → NiO(OH) + H₂O + e⁻ (réaction b)

Lorsque le nickel a changé d'état d'oxydation, une deuxième réaction d'oxydation prend le relais pour continuer à charger l'électrode négative 10 (cette électrode négative étant en zinc, fer ou lithium typiquement), jusqu'à la charge complète de la batterie. Cette deuxième réaction transforme les ions hydroxyles de l'électrolyte 50 en oxygène selon la réaction de dégagement d'oxygène classique :

4 OH⁻ → O₂ + 2 H₂O + 4 e⁻

La séparation de la charge d'une batterie métal-air en deux phases comme décrit ci-avant, en prévoyant une première phase utilisant la deuxième électrode positive 30 puis une deuxième phase utilisant une troisième électrode positive 40 trouve un intérêt tout particulier lorsque la deuxième électrode positive 30 est composée d'un oxyde qui subit deux réactions d'oxydation successives comme décrit ci-avant. Il est alors pertinent de prévoir un basculement de la première phase de charge vers la deuxième phase de charge lorsque la première réaction d'oxydation (réaction b) a transformé l'essentiel du métal de l'oxyde d'un premier état d'oxydation vers un deuxième état d'oxydation.

L'exemple décrit plus haut peut typiquement se rapporter à une deuxième électrode positive 30 en oxyhydroxyde de nickel. Toutefois, d'autres composés peuvent être utilisés comme par exemple l'oxyde d'argent ou l'oxyde de manganèse. La deuxième électrode positive 30 est typiquement un composé ayant un potentiel d'oxydo-réduction plus positif qu'un potentiel d'oxydo-réduction du métal de l'électrode négative (typiquement le zinc, le fer ou le lithium). Il est en outre avantageux de prévoir un matériau pour la deuxième électrode positive 30 ayant un potentiel d'oxydo-réduction plus positif que le potentiel d'oxydo-réduction de l'électrode à air.

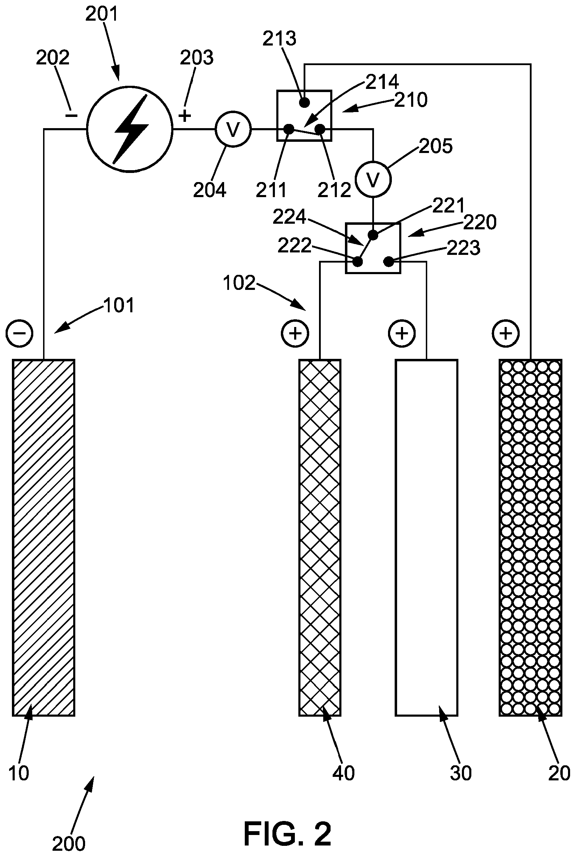

La mise en oeuvre du procédé de charge et de décharge peut reposer sur l'utilisation d'un système de relais ou tout type de commutateur comme ceux représentés sur la figure 2.

La figure 1B représente une cellule symétrique (100) d'une batterie métal-air comprenant deux ensembles d'électrodes positives selon la figure 1A ayant en commun leur électrode négative. La cellule symétrique comprend une électrode négative 10, un électrolyte 50 de pH fortement basique, typiquement de valeur égale ou supérieure à 14 et, de part et d'autre de l'électrode négative 10, un ensemble d'électrodes positives comprenant une première électrode positive 20 formant une électrode à air, une deuxième électrode positive 30 formant une électrode de puissance de la batterie comprenant la cellule 100 et une troisième électrode positive 40 formant une électrode de dégagement d'oxygène de la cellule 100.

Ainsi, selon un mode particulier de réalisation, les première, deuxième et troisième électrodes positives sont positionnées de manière symétrique dans la cellule (100) autour de l'électrode électrode négative 10.

La figure 2 représente schématiquement une électrode négative 10, une première électrode positive 20 (électrode à air), une deuxième électrode positive 30 (dite électrode de puissance) et une troisième électrode positive 40 (typiquement une grille métallique en un métal, de préférence un métal pur tel que le nickel ou l'argent. Les électrodes de la figure 2 sont en des matériaux stables dans le milieu fortement basique d'un électrolyte de batterie métal-air.

La batterie 200 est reliée par ses bornes négative 101 et positive 102 à un circuit qui fournit de l'énergie à la batterie ou bien consomme l'énergie fournie par la batterie. Sur la figure 2, le circuit 201 fournit de l'énergie pour charger la batterie. La borne négative 202 du circuit 201 est reliée à l'électrode négative 10 tandis que la borne positive 203 du circuit 201 est reliée à une électrode positive de la batterie 200. Un premier commutateur 210 permet de sélectionner au choix une connexion entre la borne positive 203 du circuit 201 et la première électrode positive 20 ou l'une parmi la deuxième électrode positive 30 et la troisième électrode positive 40.

Ce premier commutateur 210 comprend trois points de connexion 211, 212, 213, un élément 214 permettant de relier le point de connexion 211 à l'un quelconque des points 212 ou 213.

Un premier appareil de mesure permet de contrôler un paramètre électrique de la batterie, tel qu'un courant, un potentiel électrique ou une tension, en amont du premier commutateur 210 afin de le comparer à une valeur seuil permettant de déterminer quand le premier commutateur doit basculer de l'électrode à air vers l'une des deux autres électrodes positives. Le premier appareil de mesure peut être une sonde de courant ou un voltmètre 204 par exemple.

Un deuxième commutateur 220 placé en aval du point de connexion 212 permet de sélectionner une électrode parmi la deuxième électrode positive 30 et la troisième électrode positive 40. Ce deuxième commutateur 220 comprend également trois points de connexion 221, 222, 223 et un élément 224 permettant de relier le point de connexion 221 à l'une des électrodes parmi la deuxième électrode positive 30 connectée au point de connexion 223 et la troisième électrode positive 40 connectée au point de connexion 222.

Un deuxième appareil de mesure permet de contrôler un paramètre électrique de la batterie, tel que par exemple un courant, un potentiel électrique ou une tension, en amont du deuxième commutateur 220 et en aval du premier commutateur 210. Ce paramètre électrique est comparé à une valeur seuil permettant de déterminer quand le premier commutateur doit basculer d'une électrode à l'autre. Le deuxième appareil de mesure peut par exemple être une sonde de courant ou un voltmètre 205.

L'utilisation d'un premier commutateur 210 et d'un deuxième commutateur 220 permet de mettre en oeuvre le procédé de charge en deux phases de l'invention et permet également une gestion plus pertinente de la restitution d'énergie électrique par la batterie 200 en phase de décharge.

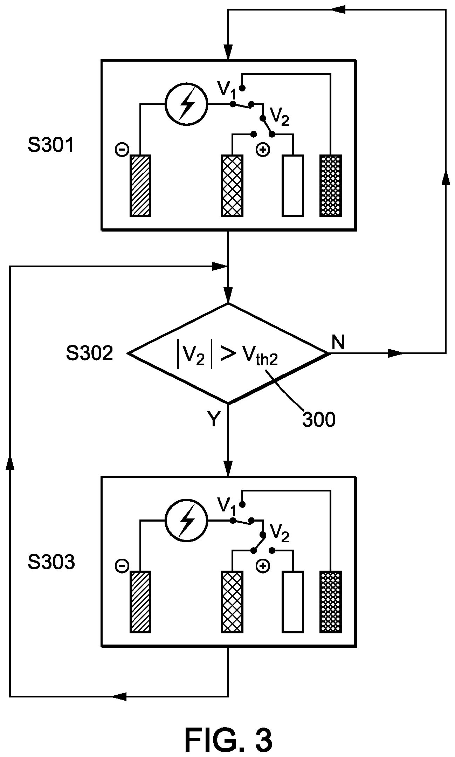

La figure 3 représente schématiquement un ordinogramme en trois étapes d'une charge d'une cellule 100 de batterie 200 métal-air selon l'invention.

Initialement, les premier 210 et deuxième 230 commutateurs sont configurés de sorte à relier la deuxième électrode positive 30 à la borne positive 203 d'un circuit 201 fournissant de l'énergie électrique à la batterie. La première étape S301 correspond donc au début de la charge de la batterie, qui fait préférentiellement intervenir d'abord la deuxième électrode positive 30. Cette deuxième électrode positive 30 peut notamment se recharger par la réaction d'oxydation b) mentionnée ci-dessus lorsque la deuxième électrode positive 30 comprend de l'oxyhydroxyde de nickel. Ainsi, dans la première phase de charge S301, lorsque la deuxième électrode positive 30 comprend un oxyde comme l'oxyde de nickel, aucun dégagement d'oxygène n'a lieu sur l'électrode, ce qui permet de la préserver contre une détérioration prématurée.

Comme indiqué par l'étape S302, une amplitude de tension mesurée par le deuxième appareil de mesure, par exemple le voltmètre 205 de la figure 2, est comparée à un seuil de tension Vth2, 300. Ce seuil de tension est une amplitude de tension au-dessus de laquelle un dégagement d'oxygène se produit sur la deuxième électrode positive. Une manière de déterminer ce seuil de tension consiste notamment à observer une variation dans la vitesse d'augmentation de l'amplitude de tension mesurée par le voltmètre 205. Une telle variation de tension est le signe annonciateur que l'essentiel du métal de l'électrode a été transformé d'un premier état d'oxydation vers un deuxième état d'oxydation (selon la réaction b) et que la deuxième réaction d'oxydation avec dégagement d'oxygène est sur le point de commencer.

Cette variation se traduit généralement par une variation soudaine dans la tension aux bornes de la cellule ou le courant transitant dans la cellule.

Pour une cellule de batterie zinc-air avec une deuxième électrode positive en oxyhydroxyde de nickel et une troisième électrode positive en nickel métallique, le seuil de tension 300 peut typiquement être compris entre 1,5V et 2.5V, et être préférentiellement fixé à 1,9V. La valeur de ce seuil de tension 300 dépend notamment du métal de l'électrode négative 10 (par exemple zinc, fer ou lithium) et de la constitution de la deuxième électrode positive 30.

Tant que la valeur de la tension V2 mesurée par le deuxième appareil de mesure (voltmètre 224 sur la figure 2) correspond à une amplitude inférieure à celle du seuil de tension 300, la charge se fait sur la deuxième électrode positive 30. Lorsque l'amplitude de tension mesurée devient supérieure au seuil de tension 300, le deuxième commutateur 220 déconnecte la deuxième électrode positive 30 de la borne positive 203 du circuit 201 et relie la troisième électrode positive 40 à cette borne positive 203, comme illustré sur l'étape S303 de la figure 3. Cette étape S303 correspond à la deuxième phase de charge du procédé selon l'invention.

Dans la mesure où la puissance électrique fournie à la batterie en charge peut subir des fluctuations, par exemple un apport soudain d'une forte puissance électrique, il peut être avantageux de prévoir une comparaison de la tension V2 au seuil de tension 300 en continue.

Dans certains exemples d'application de la présente invention, le circuit 201 peut comprendre un panneau photovoltaïque ou un accumulateur de véhicule électrique, pour lesquels la puissance électrique de charge fluctue dans le temps. Le taux d'ensoleillement peut générer des pics de puissance dans le circuit 201. De même dans un véhicule électrique un freinage peut être une opportunité de récupération de fortes puissances générées pendant un bref lapse de temps. Lorsque de tels évènements se produisent, il est avantageux de charger de préférence la deuxième électrode positive 30, qui est, notamment lorsqu'un oxyde de métal la compose, en mesure d'offrir une charge plus rapide que ne le pourrait la troisième électrode positive 40. Procéder ainsi lors de brefs apports de fortes puissances en charge limite les effets négatifs d'un dégagement d'oxygène sur la deuxième électrode positive 30, mais réduit le temps de charge.

En outre, une variante dans le procédé de charge peut être envisagée dans laquelle la troisième électrode positive 40 ou bien la première électrode positive est reliée à la borne positive 203 du circuit 201 en début de charge, de sorte que la deuxième électrode positive 30 n'est branchée que lorsque la puissance électrique fournie à la batterie dépasse un certain seuil. Ce seuil de puissance électrique fournie peut être détecté notamment par une sonde de courant, une sonde à effet hall, un voltmètre ou ampèremètre qui mesurent le courant ou la tension aux bornes de la batterie. Un basculement en charge vers la deuxième électrode positive 30 est réalisé au niveau des commutateurs lorsqu'une variation soudaine à la hausse de l'amplitude de courant ou de l'amplitude de tension aux bornes de la batterie est détectée.

Une fois que la batterie 200 est complètement ou partiellement chargée, avec un procédé de charge comprenant deux phases comme celles décrites ci-avant, elle peut être utilisée en phase de décharge.

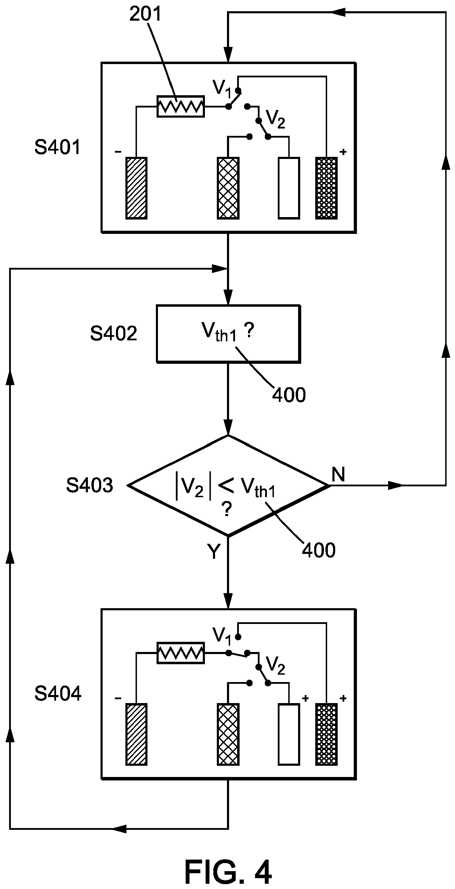

La figure 4 illustre un ordinogramme dans lequel le circuit 201 consomme l'énergie électrique délivrée par la batterie 200.

Lorsque la batterie 200 se décharge, la troisième électrode positive 40 est rarement utilisée et le deuxième commutateur 220 relie la deuxième électrode positive 30 à la borne positive 203 du circuit 201.

En début de décharge, il est notamment possible de placer le premier commutateur 210 dans une position qui relie la première électrode positive 20 à la borne positive 203 du circuit 201. Ceci est représenté à l'étape S401 sur la figure 4. La première électrode positive 20 consomme l'oxygène de l'air pour fournir de la puissance électrique au circuit. Toutefois, la vitesse de diffusion de l'air dans la structure poreuse de l'électrode à air limite la puissance électrique maximale que la batterie peut délivrer dans cette configuration.

Pour répondre à des appels de puissance plus importants, l'invention propose, en phase de décharge, de déterminer un seuil de demande en puissance électrique du circuit 201. Lorsqu'un appel de puissance supérieure au seuil de demande est identifié le premier commutateur 210 est activé afin de relier la deuxième électrode positive 30 à la borne positive 203 du circuit 201 en déconnectant l'électrode à air.

Comme indiqué sur l'ordinogramme de la figure 4, le seuil de demande peut être une tension seuil 400, Vth1. Lorsque l'amplitude de la tension V1 mesurée par le voltmètre 204 de la figure 2 est supérieure à la tension seuil 400, la décharge suit un premier régime de décharge utilisant l'électrode à air sur la borne positive 203 du circuit 201. Lorsque l'amplitude de la tension V1 est inférieure à la tension seuil 400, le premier commutateur connecte la deuxième électrode positive 30 à la borne positive 203 du circuit 201. Ceci est représenté par l'étape S403 et S404 de la figure 4.

En outre, la figure 4 indique que la tension seuil est estimée à une étape intermédiaire S402, et ce en continu. En effet, la capacité de la batterie à répondre à une demande de puissance du circuit décroit avec la décharge de la batterie. La tension seuil 400 peut être notamment estimée à partir d'une comparaison entre l'amplitude d'une tension mesurée entre l'électrode négative 10 et la première électrode positive 20, et l'amplitude d'une tension mesurée entre l'électrode négative 10 et la deuxième électrode positive 30. Alternativement, la tension seuil 400 peut être estimée sur la base de mesures réalisées lors d'un premier cycle d'utilisation en décharge de la batterie, ou bien à partir de simulations numériques effectuées en prenant en compte les matériaux utilisés dans les électrodes de la batterie.

Le procédé décrit ci-avant peut notamment être mis en oeuvre par une unité de pilotage tel qu'un BMS (pour « battery management system » selon la terminologie anglo-saxonne).

Il a notamment été constaté que les performances électriques des électrodes positives dépendent de leurs tailles. Une électrode plus épaisse offre une plus grande densité d'énergie du fait de la présence d'une plus grande quantité de matière transformable selon les réactions d'oxydo-réduction qui ont lieu dans la batterie, mais une plus faible puissance du fait d'une plus grande résistance électrique. Afin de trouver un bon équilibre entre puissance disponible et densité de puissance, il est avantageux de prévoir une deuxième électrode positive 30 dont la capacité énergétique (exprimée en mAh/cm²) correspond sensiblement au tiers de la capacité énergétique de l'électrode négative 10. Ce ratio offre de bonnes performances en puissance et énergie dans une batterie métal-air avec une deuxième électrode positive 30 en oxyhydroxyde de nickel notamment.

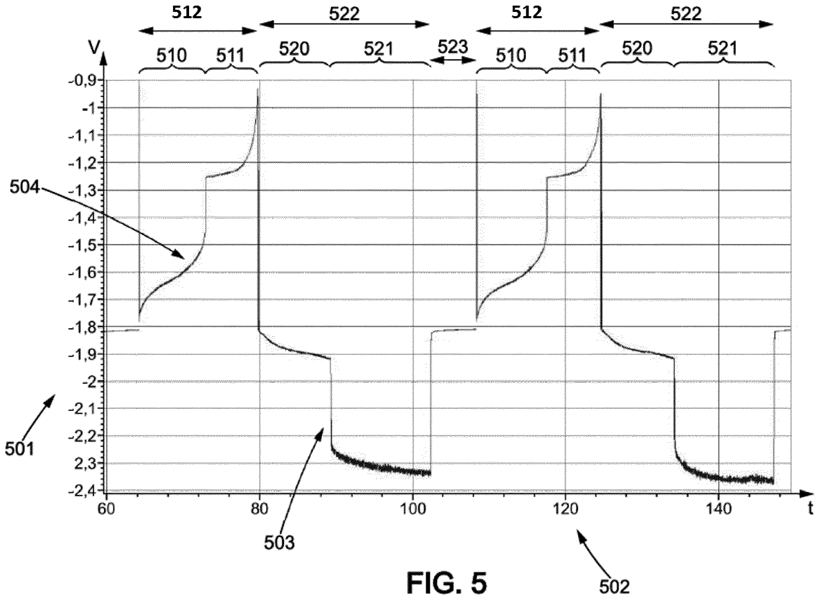

Les cycles de charge et de décharge décrits ci-avant sont répétés dans une batterie métal-air tout au long de son utilisation. La figure 5 illustre à cet effet la tension mesurée aux bornes d'une batterie métal air constituée d'une cellule telle que décrite ci-avant au cours de deux cycles de charge/décharge successifs.

L'axe vertical 501 de la figure 5 représente la tension mesurée aux bornes de la cellule, l'axe horizontal 502 représente le temps en heures.

La figure 5 comprend notamment un premier cycle 512 à courant constant pendant lequel l'amplitude de tension mesurée décroit progressivement. Ce premier cycle 512 correspond à un cycle de décharge de la batterie. Le premier cycle 512 est continu et ne comprend pas de bascule répétée entre l'électrode à air et l'électrode de puissance pour répondre à des appels de puissance au cours du temps. Il est tout à fait possible néanmoins de décharger la batterie avec un profil de tension bien différent, lorsqu'une demande de puissance plus importante intervient à un ou plusieurs moments du cycle de décharge. Le premier cycle 512 est subdivisé en deux régimes : un deuxième régime 510 pendant lequel la deuxième électrode positive 30 est utilisée, et un premier régime 511 pendant lequel la première électrode positive 20 est utilisée. Le passage du premier régime au deuxième régime est marqué par une diminution significative et rapide de l'amplitude de tension 504. Comme le montre la courbure de l'évolution de la tension mesurée au cours du temps pendant le deuxième régime 510, la puissance disponible sur la deuxième électrode positive 30 décroit à mesure que la batterie se décharge.

Lorsque la batterie est déchargée, un deuxième cycle 522 commence. Il s'agit d'un cycle de charge de la batterie. Dans une première phase 520, la deuxième électrode positive 30 est connectée tandis que l'électrode à air et la troisième électrode positive 40 sont électriquement inactives. Lorsque l'amplitude de tension 503 mesurée atteint une valeur seuil (par exemple 1,9 V), la deuxième réaction d'oxydation avec production d'oxygène est sur le point de commencer sur la deuxième électrode positive 30. Le deuxième commutateur 220 relie alors la troisième électrode positive 40 à la borne positive du circuit 201, tandis que l'électrode à air et la deuxième électrode positive sont électriquement inactives. Cette deuxième phase 521 de charge utilisant la troisième électrode positive 40 préserve la deuxième électrode positive 30 contre les effets négatifs d'un dégagement d'oxygène.

Entre deux cycles de charge/décharge, il se peut que la batterie reste inactive, ce qui est représenté sur la figure 5 par une période 523 au cours de laquelle la tension mesurée est la tension en circuit ouvert en fin de charge de la batterie. Les cycles de charge et décharge reprennent ensuite autant de fois que nécessaire jusqu'à ce que la batterie doivent être remplacée.

L'invention se rapporte également à un produit programme d'ordinateur comportant une suite d'instructions mémorisées sur un support de mémorisation pour exécution par un ordinateur ou un dispositif dédié, le programme étant configuré pour exécuter le procédé décrit ci-avant au moyen d'une unité de pilotage.

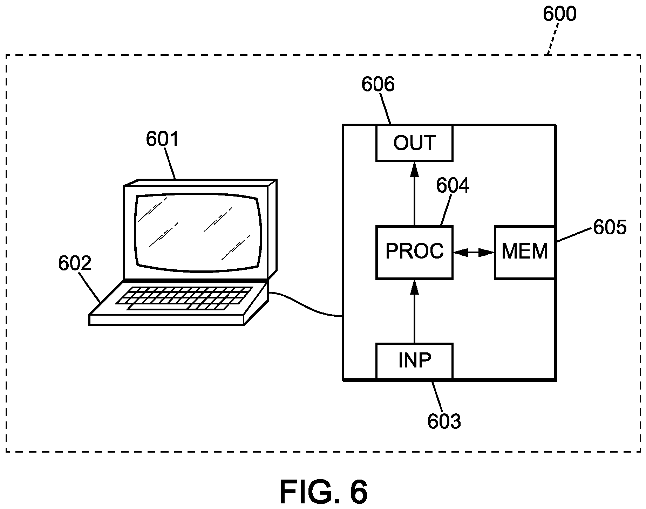

La figure 6 représente un exemple de système informatique permettant de faire fonctionner un produit programme d'ordinateur comprenant des instructions mettant en oeuvre le procédé de la présente invention.

Dans ce mode de réalisation, le dispositif comporte un ordinateur 600, comprenant une mémoire 605 pour stocker des instructions permettant la mise en oeuvre du procédé, les données de mesures reçues, et des données temporaires pour réaliser les différentes étapes du procédé tel que décrit précédemment.

L'ordinateur comporte en outre un circuit 604. Ce circuit peut être, par exemple :
- un processeur apte à interpréter des instructions sous la forme de programme informatique, ou
- une carte électronique dont les étapes du procédé de l'invention sont décrites dans le silicium, ou encore
- une puce électronique programmable comme une puce FPGA (pour « Field-Programmable Gate Array » en anglais).

Cet ordinateur comporte une interface d'entrée 603 pour la réception de données de mesures, et une interface de sortie 606 pour la fourniture de commandes contrôlant le dispositif d'évacuation 607. Enfin, l'ordinateur peut comporter, pour permettre une interaction aisée avec un utilisateur, un écran 601 et un clavier 602. Bien entendu, le clavier est facultatif, notamment dans le cadre d'un ordinateur ayant la forme d'une tablette tactile, par exemple.

L'invention ne se limite pas exclusivement aux exemples de réalisation qui ont servi à illustrer l'invention présentés ci-avant. Notamment, les matériaux utilisés dans les différentes électrodes ne sont donnés qu'à titre illustratif. Une troisième électrode positive peut notamment être utilisée même lorsque la deuxième électrode positive est elle-même une grille métallique et non un matériau comprenant un oxyde subissant deux réactions d'oxydation différentes et successives en phase de charge.

L'invention trouve application dans les batteries métal-air rechargeables, et permet d'augmenter leur durée de vie et leurs performances électriques. La gestion améliorée de l'énergie électrique transitant dans une batterie métal-air selon l'invention les rend utilisables dans de nombreux systèmes comme par exemple les dispositifs photovoltaïques, sujets à des variations de tensions liées à l'ensoleillement, ou les véhicules électriques qui consomment et emmagasinent des puissances électriques variables liées à l'utilisation qui est faite du véhicule et des conditions de freinage ou accélération.

## Revendications

1. Procédé de gestion de l'énergie électrique transitant dans une batterie (200) métal-air comprenant au moins une cellule (100) comportant :
- une électrode négative (10) ;
- une première électrode positive (20) formant une électrode à air de la cellule et ;
- une deuxième électrode positive (30) formant une électrode de puissance de la cellule ;
**caractérisé en ce que,** la cellule comprenant en outre une troisième électrode positive (40) de dégagement d'oxygène, le procédé comprend :
* une première phase (521) de charge de la cellule dans laquelle une tension de charge est appliquée à la cellule, la tension de charge faisant passer un courant entre l'électrode négative et la deuxième électrode positive, les première et troisième électrodes positives étant électriquement inactives ; et
* une deuxième phase de charge (520) de la cellule dans laquelle la tension de charge est appliquée à la cellule, la tension de charge faisant passer le courant entre l'électrode négative et ladite troisième électrode positive de dégagement d'oxygène, les première et deuxième électrodes positives étant électriquement inactives.

2. Procédé selon la revendication 1, **caractérisé en ce que**, la deuxième électrode positive comportant un oxyde d'un métal dans un état d'oxydation donné, le procédé comprend en outre :
- passer de la première phase à la deuxième phase sur détection d'un changement de la tension de charge.

3. Procédé selon l'une quelconque des revendications précédentes, **caractérisé en ce qu'**il comprend en outre :
- au moins pendant la première phase de charge, mesurer une amplitude de tension entre l'électrode négative et la deuxième électrode positive,
- sur détection d'une mesure de ladite amplitude de tension supérieure à un seuil de tension (300) prédéterminé, déconnecter la deuxième électrode positive et connecter la troisième électrode positive, pour passer de la première phase de charge à la deuxième phase de charge.

4. Procédé selon l'une quelconque des revendications précédentes, **caractérisé en ce que** le seuil de tension est une amplitude de tension au-dessus de laquelle un dégagement d'oxygène se produit sur la deuxième électrode positive.

5. Procédé selon l'une quelconque des revendications précédentes, **caractérisé en ce que**, pour une phase de décharge de la cellule dans laquelle l'électrode négative est connectée à une borne négative (202) d'un circuit (203) électrique pour fournir de l'énergie électrique à ce circuit électrique, le procédé comporte en outre :
- obtenir une information sur la demande en énergie électrique dudit circuit, et
en fonction de la demande du circuit, appliquer au choix un parmi :
* un premier régime (511) de décharge de la cellule dans lequel la première électrode positive est connectée à une borne positive (203) du circuit électrique, et
* un deuxième régime (510) de décharge de la cellule dans lequel la deuxième électrode positive est connectée à la borne positive du circuit électrique.

6. Procédé selon la revendication 5, **caractérisé en ce que** le premier régime correspond à une fourniture de puissance électrique inférieure à un seuil de demande du circuit et le deuxième régime correspond à une fourniture de puissance électrique supérieure au seuil de demande.

7. Procédé selon la revendication 6, comprenant en outre :
- mesurer une amplitude de tension entre l'électrode négative et une électrode parmi la première électrode positive et la deuxième électrode positive qui est connectée à la borne positive du circuit ; et
lorsque l'amplitude de la tension est supérieure à une tension seuil (400) prédéterminée, la tension seuil étant représentative d'un seuil de demande du circuit :
- sélectionner le deuxième régime, et
lorsque la tension est inférieure à la tension seuil :
- sélectionner le premier régime.

8. Procédé selon la revendication 7, dans lequel la tension seuil prédéterminée est estimée à intervalle de temps régulier à partir d'une comparaison entre une amplitude de tension mesurée entre l'électrode négative et la première électrode positive et une amplitude de tension mesurée entre l'électrode négative et la deuxième électrode positive.

9. Produit programme d'ordinateur comportant une suite d'instructions mémorisées sur un support de mémorisation pour exécution par un ordinateur ou un dispositif dédié, ledit programme étant configuré pour exécuter le procédé selon l'une quelconque des revendications 1 à 8 au moyen d'une unité de pilotage.

10. Cellule (100) pour batterie (200) métal-air comprenant :
- une électrode négative (10) ;
- une première électrode positive (20) formant une électrode à air de la cellule ;
- une deuxième électrode positive (30) formant une électrode de puissance de la cellule ;
- une troisième électrode positive (40) formant une électrode de dégagement d'oxygène de la cellule ;
la cellule étant **caractérisée en ce que :**
la deuxième électrode positive (30) est positionnée entre l'électrode négative (10) et la première électrode positive (20), la cellule (100) comprenant en outre une unité de pilotage configurée pour mettre en oeuvre le procédé selon l'une quelconque des revendications 1 à 8.

11. Cellule selon la revendication 10, **caractérisée en ce que** la troisième électrode positive (40) est positionnée entre l'électrode négative (10) et la première électrode positive (20).

12. Cellule selon l'une quelconque des revendications 10 ou 11, **caractérisée en ce que** la deuxième électrode positive est une électrode métallique comprenant un composé ayant un potentiel d'oxydo-réduction plus positif qu'un potentiel d'oxydo-réduction d'un métal de l'électrode négative.

13. Cellule selon l'une quelconque des revendications 10 à 12, dans laquelle la deuxième électrode positive est une électrode métallique comprenant un composé choisi parmi : l'oxyhydroxyde de nickel, l'oxyde d'argent, l'oxyde de manganèse et un mélange de ces composés.

14. Cellule selon l'une quelconque des revendications 10 à 13, **caractérisée en ce que** la troisième électrode positive est une grille métallique en un composé choisi parmi : l'acier, le nickel, le titane.

15. Cellule selon l'une quelconque des revendications 10 à 14, **caractérisée en ce que** la deuxième électrode positive est configurée pour avoir une capacité énergétique correspondant sensiblement au tiers de la capacité énergétique de l'électrode négative.

16. Cellule (100) pour batterie (200) métal-air comprenant deux ensembles d'électrodes positives selon l'une quelconque des revendications 10 à 15, disposées de manière symétrique de part et autre de l'électrode négative (10).

17. Batterie métal-air comprenant au moins une cellule selon l'une quelconque des revendications 10 à 16.

## Patentansprüche

1. Verfahren zur Verwaltung der elektrischen Energie, die durch eine Metall-Luft-Batterie (200) fließt, umfassend wenigstens eine Zelle (100), welche aufweist:
- eine negative Elektrode (10);
- eine erste positive Elektrode (20), die eine Luftelektrode der Zelle bildet, und
- eine zweite positive Elektrode (30), die eine Leistungselektrode der Zelle bildet;
**dadurch gekennzeichnet, dass,** wobei die Zelle ferner eine dritte positive Elektrode (40) für die Sauerstofffreisetzung umfasst, das Verfahren umfasst:
- eine erste Phase (521) des Ladens der Zelle, in der eine Ladespannung an die Zelle angelegt wird, wobei die Ladespannung einen Strom zwischen der negativen Elektrode und der zweiten positiven Elektrode fließen lässt, wobei die erste und die dritte positive Elektrode elektrisch inaktiv sind; und
- eine zweite Phase des Ladens (520) der Zelle, in der die Ladespannung an die Zelle angelegt wird, wobei die Ladespannung den Strom zwischen der negativen Elektrode und der dritten positiven, Sauerstoff freisetzenden Elektrode fließen lässt und die erste und zweite positive Elektrode elektrisch inaktiv sind.

2. Verfahren nach Anspruch 1, **dadurch gekennzeichnet, dass**, wobei die zweite positive Elektrode ein Oxid eines Metalls in einem gegebenen Oxidationszustand aufweist, das Verfahren ferner umfasst:
- Übergehen von der ersten Phase zur zweiten Phase bei Erkennung einer Änderung der Ladespannung.

3. Verfahren nach einem der vorhergehenden Ansprüche, **dadurch gekennzeichnet, dass** es ferner umfasst:
- wenigstens während der ersten Ladephase, Messen einer Spannungsamplitude zwischen der negativen Elektrode und der zweiten positiven Elektrode,
- bei Erkennung einer Messung der Spannungsamplitude, die höher als ein vorbestimmter Spannungsschwellenwert (300) ist, Abtrennen der zweiten positiven Elektrode und Verbinden der dritten positiven Elektrode, um von der ersten Ladephase in die zweite Ladephase überzugehen.

4. Verfahren nach einem der vorhergehenden Ansprüche, **dadurch gekennzeichnet, dass** die Spannungsschwelle eine Spannungsamplitude ist, oberhalb derer eine Sauerstofffreisetzung an der zweiten positiven Elektrode stattfindet.

5. Verfahren nach einem der vorhergehenden Ansprüche, **dadurch gekennzeichnet, dass** für eine Entladephase der Zelle, in der die negative Elektrode mit einem negativen Anschluss (202) einer elektrischen Schaltung (203) verbunden ist, um elektrische Energie an diese elektrische Schaltung zu liefern, das Verfahren ferner umfasst:
- Erhalten von Informationen über den Bedarf an elektrischer Energie der Schaltung, und in Abhängigkeit von dem Bedarf der Schaltung, Anwenden eines aus Folgendem:
- einen ersten Zellentlademodus (511), wobei die erste positive Elektrode mit einem positiven Anschluss (203) der elektrischen Schaltung verbunden wird, und
- einen zweiten Zellentlademodus (510), wobei die zweite positive Elektrode mit dem positiven Anschluss der Schaltung verbunden wird.

6. Verfahren nach Anspruch 5, **dadurch gekennzeichnet, dass** der erste Modus einer elektrischen Leistungsabgabe unterhalb eines Bedarfsschwellenwerts der Schaltung entspricht und der zweite Modus einer elektrischen Leistungsabgabe oberhalb des Bedarfsschwellenwerts entspricht.

7. Verfahren nach Anspruch 6, ferner umfassend:
- Messen einer Spannungsamplitude zwischen der negativen Elektrode und einer Elektrode aus erster positiver Elektrode und zweiter positiver Elektrode, die mit dem positiven Anschluss der Schaltung verbunden wird; und wenn die Spannungsamplitude größer als eine vorbestimmte Schwellenspannung (400) ist, wobei die Schwellenspannung repräsentativ für eine Anforderungsschwelle der Schaltung ist:
- Wählen des zweiten Modus, und wenn die Spannung unterhalb der Schwellenspannung liegt:
- Wählen des ersten Modus.

8. Verfahren nach Anspruch 7, wobei die voreingestellte Schwellenspannung in regelmäßigen Zeitabständen aus einem Vergleich zwischen einer zwischen der negativen Elektrode und der ersten positiven Elektrode gemessenen Spannungsamplitude und einer zwischen der negativen Elektrode und der zweiten positiven Elektrode gemessenen Spannungsamplitude geschätzt wird.

9. Computerprogrammprodukt, umfassend eine Folge von Anweisungen, die auf einem Speichermedium zur Ausführung durch einen Computer oder einer zugeordneten Vorrichtung gespeichert sind, wobei das Programm dazu ausgebildet ist, das Verfahren nach einem der Ansprüche 1 bis 8 mittels einer Steuereinheit auszuführen.

10. Zelle (100) für eine Metall-Luft-Batterie (200), umfassend:
- eine negative Elektrode (10);
- eine erste positive Elektrode (20), die eine Luftelektrode der Zelle bildet;
- eine zweite positive Elektrode (30), die eine Leistungselektrode der Zelle bildet;
- eine dritte positive Elektrode (40), die eine Sauerstofffreisetzungselektrode der Zelle bildet;
wobei die Zelle **dadurch gekennzeichnet ist, dass:**
die zweite positive Elektrode (30) zwischen der negativen Elektrode (10) und der ersten positiven Elektrode (20) positioniert ist, wobei die Zelle (100) ferner eine Steuereinheit umfasst, die dazu ausgebildet ist, das Verfahren nach einem der Ansprüche 1 bis 8 durchzuführen.

11. Zelle nach Anspruch 10, **dadurch gekennzeichnet, dass** die dritte positive Elektrode (40) zwischen der negativen Elektrode (10) und der ersten positiven Elektrode (20) positioniert ist.

12. Zelle nach einem der Ansprüche 10 oder 11, **dadurch gekennzeichnet, dass** die zweite positive Elektrode eine Metallelektrode ist, die eine Verbindung mit einem Redoxpotential umfasst, das positiver ist als ein Redoxpotential eines Metalls der negativen Elektrode.

13. Zelle nach einem der Ansprüche 10 bis 12, wobei die zweite positive Elektrode eine Metallelektrode ist, die eine Verbindung umfasst, die gewählt ist aus: Nickeloxidhydroxid, Silberoxid, Manganoxid und einer Mischung dieser Verbindungen.

14. Zelle nach einem der Ansprüche 10 bis 13, **dadurch gekennzeichnet, dass** die dritte positive Elektrode ein Metallgitter aus einer Verbindung ist, die gewählt ist aus: Stahl, Nickel, Titan.

15. Zelle nach einem der Ansprüche 10 bis 14, **dadurch gekennzeichnet, dass** die zweite positive Elektrode dazu ausgebildet ist, eine Energiekapazität aufzuweisen, die im Wesentlichen einem Drittel der Energiekapazität der negativen Elektrode entspricht.

16. Zelle (100) für eine Metall-Luft-Batterie (200), umfassend zwei Sätze positiver Elektroden nach einem der Ansprüche 10 bis 15, die symmetrisch auf beiden Seiten der negativen Elektrode (10) angeordnet sind.

17. Metall-Luft-Batterie, umfassend wenigstens eine Zelle nach einem der Ansprüche 10 bis 16.

## Claims

1. Method for managing the electrical energy passing through a metal-air battery (200) comprising at least one cell (100) comprising:
- a negative electrode (10);
- a first positive electrode (20) forming an air electrode of the cell; and
- a second positive electrode (30) forming a power electrode of the cell;
**characterized in that,** the cell further comprising an oxygen-evolution third positive electrode (40), the method comprises:
* a first cell-charging phase (521) in which a charging voltage is applied to the cell, the charging voltage causing current to travel between the negative electrode and the second positive electrode, the first and third positive electrodes being electrically inactive; and
* a second cell-charging phase (520) in which the charging voltage is applied to the cell, the charging voltage causing current to travel between the negative electrode and said oxygen-evolution third positive electrode, the first and second positive electrodes being electrically inactive.

2. Method according to claim 1, **characterized in that**, the second positive electrode comprises an oxide of a metal in a given oxidation state, the method further comprising:
- switching from the first phase to the second phase upon detection of a change in the charging voltage.

3. Method according to any one of the preceding claims, **characterized in that** it further comprises:
- at least during the first charging phase, measuring a voltage amplitude between the negative electrode and the second positive electrode,
- upon detecting a measurement of said voltage amplitude greater than a predetermined voltage threshold (300), disconnecting the second positive electrode and connecting the third positive electrode, in order to switch from the first charging phase to the second charging phase.

4. Method according to any one of the preceding claims, **characterized in that** the voltage threshold is a voltage amplitude above which oxygen evolution occurs on the second positive electrode.

5. Method according to any one of the preceding claims, **characterized in that**, for a discharging phase of the cell in which the negative electrode is connected to a negative terminal (202) of an electric circuit (203) in order to supply electrical energy to this electric circuit, the method further comprises:
- obtaining information on the demand for electrical energy of said circuit, and based on the demand of the circuit, applying one of the following:
* a first operating mode (511) for discharging the cell in which the first positive electrode is connected to a positive terminal (203) of the electric circuit, and
* a second operating mode (510) for discharging the cell in which the second positive electrode is connected to the positive terminal of the electric circuit.

6. Method according to claim 5, **characterized in that** the first operating mode corresponds to a supply of electrical power below a demand threshold of the circuit, and the second operating mode corresponds to a supply of electrical power above the demand threshold.

7. Method according to claim 6, further comprising:
- measuring a voltage amplitude between the negative electrode and an electrode among the first positive electrode and the second positive electrode which is connected to the positive terminal of the circuit; and
when the voltage amplitude is above a predetermined threshold voltage (400), the threshold voltage being representative of a demand threshold of the circuit:
- selecting the second operating mode, and
when the voltage is below the threshold voltage:
- selecting the first operating mode.

8. Method according to claim 7, wherein the predetermined threshold voltage is estimated at regular time intervals based on a comparison between the voltage amplitude measured between the negative electrode and the first positive electrode and the voltage amplitude measured between the negative electrode and the second positive electrode.

9. Computer program product comprising a series of instructions stored on a storage medium for execution by a computer or a dedicated device, said program being configured to execute the method according to any one of claims 1 to 8 by means of a control unit.

10. Cell (100) for a metal-air battery (200), comprising:
- a negative electrode (10);
- a first positive electrode (20) forming an air electrode of the cell;
- a second positive electrode (30) forming a power electrode of the cell;
- a third positive electrode (40) forming an oxygen-evolution electrode of the cell; the cell being **characterized in that:**
the second positive electrode (30) is positioned between the negative electrode (10) and the first positive electrode (20), the cell (100) further comprising a control unit configured to implement the method according to any of claims 1 to 8.

11. Cell according to claim 10, **characterized in that** the third positive electrode (40) is positioned between the negative electrode (10) and the first positive electrode (20).

12. Cell according to any one of claims 10 or 11, **characterized in that** the second positive electrode is a metal electrode comprising a compound having a more positive oxidation-reduction potential than the oxidation-reduction potential of a metal of the negative electrode.

13. Cell according to any one of claims 10 to 12, wherein the second positive electrode is a metal electrode comprising a compound selected among: nickel oxide hydroxide, silver oxide, manganese oxide, and a mixture of these compounds.

14. Cell according to any one of claims 10 to 13, **characterized in that** the third positive electrode is a metal grid made of a compound selected among: steel, nickel, titanium.

15. Cell according to any one of claims 10 to 14, **characterized in that** the second positive electrode is configured to have an energy capacity substantially corresponding to one third of the energy capacity of the negative electrode.

16. Cell (100) for a metal-air battery (200) comprising two sets of positive electrodes according to any one of claims 10 to 15, arranged symmetrically one on each side of the negative electrode (10).

17. Metal-air battery comprising at least one cell according to any one of claims 10 to 16.
